# EUROPEAN PATENT SPECIFICATION

(11) **EP 4 561 808 B1**
(45) Date of publication and mention of the grant of the patent: **27.05.2026**
(21) Application number: 23752052.3
(22) Date of filing: 26.07.2023
(51) Int. Cl.: B29C 44/14, B29C 31/00, B29C 44/56, B29D 99/00

(54) **PLANT AND METHOD FOR MANUFACTURING A SUPPORT ELEMENT FOR THE HUMAN BODY, SUCH AS A VEHICLE SADDLE**
ANLAGE UND VERFAHREN ZUR HERSTELLUNG EINES STÜTZELEMENTS FÜR DEN MENSCHLICHEN KÖRPER, WIE ETWA EIN FAHRZEUGSATTEL
INSTALLATION ET PROCÉDÉ DE FABRICATION D'UN ÉLÉMENT DE SUPPORT POUR LE CORPS HUMAIN, TEL QU'UNE SELLE DE VÉHICULE

(30) Priority: 26.07.2022 IT 202200015744
(43) Date of publication of application: 04.06.2025
(73) Proprietor: Selle Royal Group S.p.A., 36050 Pozzoleone (VI) (IT)
(72) Inventor: BIGOLIN, Barbara, 36050 Pozzoleone (Vicenza) (IT); MALFATTI, Marco, 36050 Pozzoleone (Vicenza) (IT)
(74) Representative: Feltrinelli, Secondo Andrea
(86) International application number: PCT/IB2023/057557
(87) International publication number: WO 2024/023717

(56) References cited:
- EP-A1- 3 936 421
- WO-A1-2007/115396
- US-A- 5 441 676
- US-A- 5 714 108
- US-A1- 2012 049 605
- US-A1- 2020 180 198
- US-B2- 11 352 086

## Description

### TECHNICAL FIELD OF THE INVENTION

The present invention relates to a plant and a method for manufacturing a support element for the human body, such as a vehicle saddle.

### TECHNICAL BACKGROUND

In the sector of support elements for the human body, such as for example saddles for vehicles, for example bicycles, it is known to produce a padding, with or without an external covering which wraps it at its external or visible surface, the which padding - after being made - is bound, for example by gluing, to an upper surface of a plastic support base, for example called "hull" or "felt" in bicycles. According to this specific example, a "fork" can be constrained to the plastic base, at its lower surface, to constrain the saddle to a seat post of a bicycle frame.

It often happens, however, that the padding, once made, is extracted from the mold and only at a later time bound, for example by gluing, to the plastic base. In this case it may be difficult to connect these two elements, since the padding may lose its dimensional stability and therefore be difficult to couple with the plastic base, which instead has a well-defined shape and size.

At the same time, when the external covering is present, it could be complicated to carry out the necessary trimming step, as the padding is made of a soft material and trimming an element such as the external covering not having support points, but being working on a soft support, such as the padding, could be difficult: the trimming tool could not find a sufficiently rigid and/or shaped guide to carry out a quality job.

There is also a method which makes it possible to obtain a bicycle saddle in which there is no need for gluing between the padding and the support base patent IT1207441 B 1, in the name of the same Applicant, describes a method for making a saddle according to which an external covering is placed on a cavity of a female part of a mould, to which it conforms by means of vacuum means. In the cavity where the external covering is placed, a material which constitutes the padding of the saddle itself is injected and the mold is then closed with a male part. Thanks to the properties of the respective materials, the padding adheres to the external covering and also to a felt or support base, since the male part of the mold is shaped in such a way as to be able to house this felt.

In this case, therefore, the upper surface of the felt determines the lower surface of the padding, in the sense that these two surfaces are in contact with each other. When the mold is subsequently opened, a finished saddle is extracted, followed by the trimming of the excess part of the external covering.

US 2020/180198 A1 discloses a plant according to the preamble of claim 1 and a method for the realization of a support element for the human body.

Therefore, there is a need to provide a plant and a method which are able to compensate for the aforementioned deficiencies and which therefore allow to obtain a high-quality product, even when the padding and the support base are not coupled together immediately or in the same mold.

There is also a need to automate the production process as much as possible, in order to speed up and automate the various steps for making a support element according to the present invention.

### OBJECTS OF THE INVENTION

An object of the present invention is to overcome the drawbacks of the prior art.

A further object of the present invention is to provide a plant which allows to produce a support element in a simple, rapid and automated way.

Another object of the present invention is to provide a plant which guarantees the obtainment of a support element with quality and efficiency comparable to those obtainable with traditional moulds.

According to one aspect of the invention, a plant according to claim 1 is provided.

A still further object of the present invention is to provide a method for manufacturing a support element for the human body which is practical and can be automated.

Another object of the present invention is to provide a method which allows the steps for obtaining a support element for the human body to be speeded up and made more precise. A still further object of the present invention is to provide a method which is relatively inexpensive.

According to one aspect of the invention, a method for producing a support element according to claim 17 is provided.

The dependent claims refer to preferred and advantageous embodiments of the invention.

### BRIEF DESCRIPTION OF THE DRAWINGS

Other characteristics and advantages of the invention will be more evident from the description of an embodiment of the present invention, illustrated by way of example in the attached drawings in which:
- figure 1 is a slightly elevated perspective view of a molding unit according to the present invention in an open position;
- figures 2 and 3 illustrate respectively a slightly top perspective view of a rear detail of a first component of the molding unit of Figure 1, and a slightly top perspective view of the first component of the molding unit of Figure 1, wherein, in in the latter case, a structural component or support component according to the present invention is applied;
- figure 4 illustrates a bottom perspective view of a padding of a support element according to the present invention;
- figure 5 illustrates a partial view in longitudinal section of a completely assembled support element according to the present invention;
- figure 6 illustrates a top perspective view of a structural component or support component according to the present invention;
- figure 7 illustrates a bottom view of a padding of the support element according to the present invention in one non-final step of its realization;
- figure 8 illustrates a partial side view of a support element according to the present invention in a final step of its realization;
- figures 9 and 10 illustrate each an automated step of the method according to the present invention;
- figure 11 illustrates a sectional view of a molding unit according to the present invention in a closed position, in which the section is taken along a transversal plane of the support element obtained with it,
- figure 12 shows a perspective view of an example of a plant for making a support element according to the present invention,
- figures 13A and 13B are top plan views of two versions of the plant according to the present invention,
- figure 14 is a side view of the plant of figures 12 and 13A, and
- figure 15 is a sectional view taken along the plane of trace A-A of figure 14.

In the accompanying drawings, identical parts or components are identified by the same reference numbers.

### EMBODIMENTS OF THE INVENTION

The present invention relates to a plant 500 and a method for manufacturing a support element 100 for the human body, such as a saddle for a vehicle, for example a saddle for bicycles or motorcycles, or a backrest or a seat or an armrest for anatomical chairs, or similar support elements.

Furthermore, this plant 500 comprises a plurality of operating stations for processing at least one padding 114 equipped with a support component 122 located at the lower surface 118 of the padding 114 and/or at least one support base 150 of the support element 100.

Each operating station of the plant 500 is assigned to at least one specific step of the method according to the present invention.

In at least one version of the invention, at least one or each station of the plant 500 is an automated station and/or equipped with at least one operating robot, for example anthropomorphic. By operating robot is meant a robot capable of carrying out at least one of the steps of the method according to the present invention for the processing of the at least one padding 114 and/or of the at least one support base 150 of the support element 100.

The automated stations can each comprise a cabin, open on at least one side or completely closed, inside which the robot is positioned for carrying out the various processes, as better specified hereinafter.

In this specification, the term "upper" refers to an element that in use is positioned above or higher, or faces upwards; with the term "inferior" on the contrary, we refer to an element that in use is positioned below or lower, or is facing downwards or towards the ground.

The term "longitudinal" refers to a direction that extends along the longest part of an element while the term "transverse" refers to a direction that extends perpendicular to the longest part of an element, or that goes from side to side of the same.

By "vertical" we mean a direction or plane which in use goes from bottom to top, while by "horizontal" we mean a direction or plane which in use is parallel to the ground.

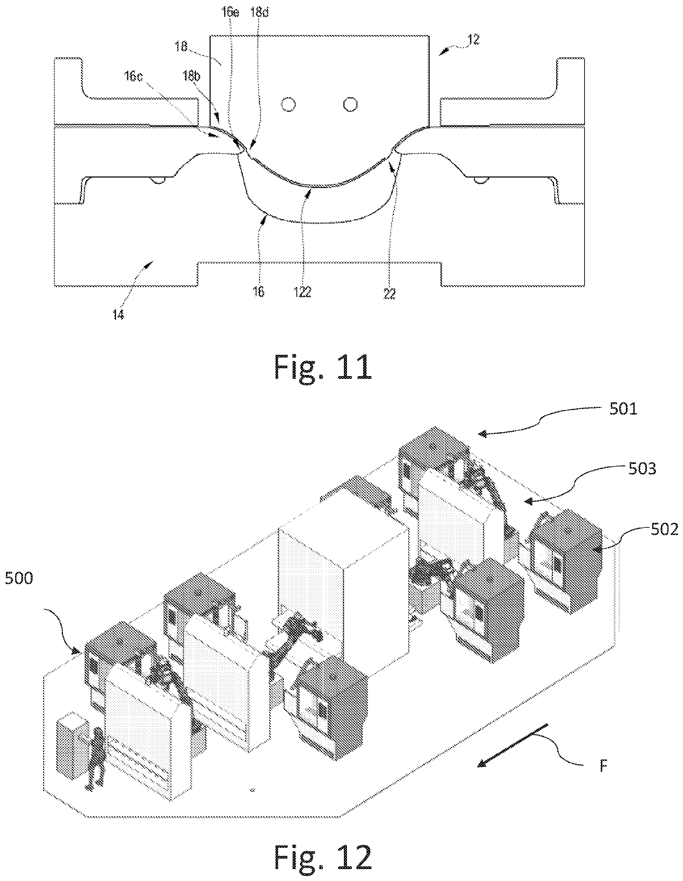

The plant according to the present invention, according to at least one version, develops in at least one longitudinal direction (indicated by the arrow F in Figure 12), i.e. it comprises at least a first line 501 of stations, along a first longitudinal direction, at least one second line 502 of stations, along a second longitudinal direction. The first and second longitudinal directions may be parallel to each other.

The first 501 and second 502 line of stations are separated by a third line 503, comprising at least one rest station 506, 511, which extends along a third longitudinal direction. The at least one rest station 506, 511 is subsequent to at least one station of the plurality of operating stations.

The third longitudinal direction may be parallel to the first and/or second longitudinal direction.

The plant therefore comprises an inlet area 504, in which at least one padding 114 is provided for use and/or in which at least one support base 150 of the support element 100 is provided.

For example, considering the exemplary image illustrated in figure 12, the at least one padding 114 follows a path along the first longitudinal direction and/or moves along the stations of the first line 501 while the at least one support base 150 follows a path along the second longitudinal direction and/or moves along the stations of the second line 502. The plant 500 also comprises at least one picking and positioning robot 505 (or "pick and place"), used to pick up and/or position the at least one padding 114 and/or the at least one support base 150.

The robot 505 is positioned between one station and another and/or between a station and a rest station, and serves to unload/upload the various stations and/or the various rest stations.

In particular, the at least one robot 505 comprises at least a first picking and positioning robot 505a, assigned in use to take the at least one padding 114 and/or the at least one support base 150 from the inlet area 504 and position it at a first operating station of the plurality of operating stations and/or in at least one rest station 506, 511.

The at least one robot 505 can also comprise at least a second picking and positioning robot 505b, assigned in use, to take the at least one padding 114 and/or the at least one support base 150 from the first operating station or from at least one rest station 506, 511 and to position it at a subsequent station or contiguous to the first operating station or at the at least one subsequent rest station 506, 511, after the processing or rest in the latter has ended.

In an alternative version of the invention, there could be several robots 505 or only some robots 505, or even only one, which move/move along several directions and between different operating stations and/or between different rest stations.

According to at least one version of the invention, the at least one robot 505 is placed along the third line 503.

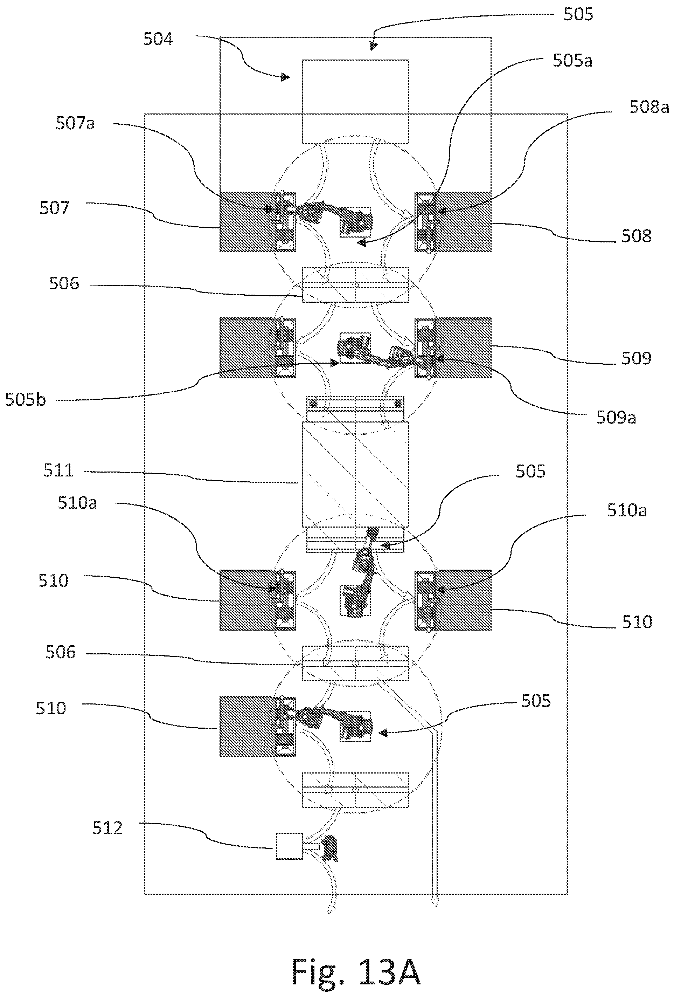

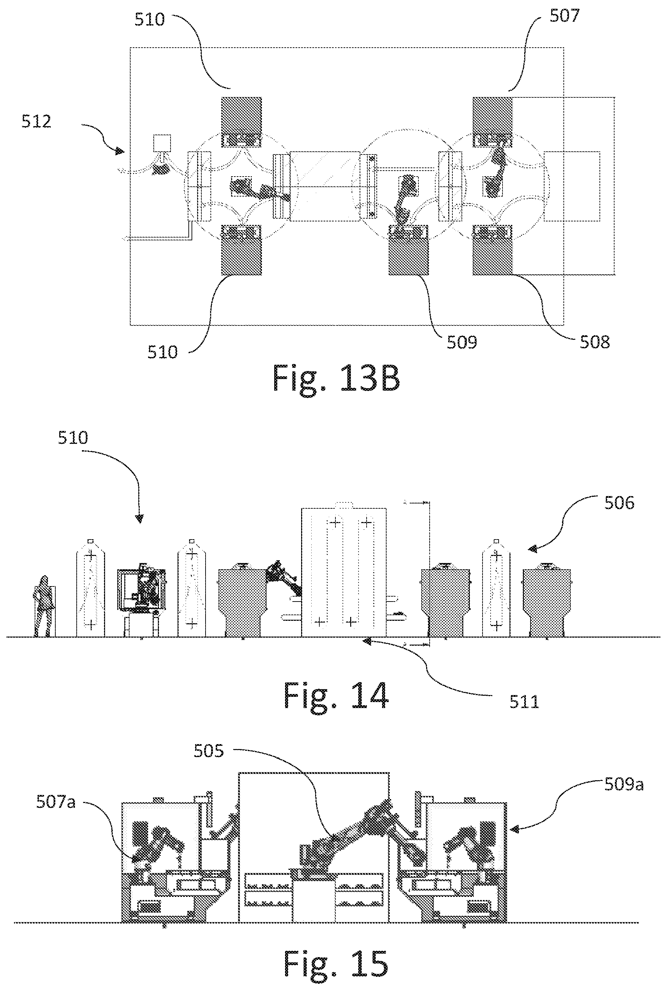

Considering figure 13 which illustrates the plant 500 in a plan view, the plant 500 can be composed of a series of areas, for example transversal (considering a direction perpendicular to the longitudinal direction indicated by the arrow F), which follow one another or contiguous to each other. Each area comprises at least one operating station belonging to the first line 501 and/or at least one operating station belonging to the second line 502, and/or at least one picking and positioning robot 505 and/or at least one rest station 506, 511.

Figure 15 shows, for example, one of these areas which is also visible from the side view of figure 14 of the plant 500.

Each rest station 506, 511 comprises a space in which the at least one padding 114 and/or the at least one support base 150 can be positioned and/or stored after a certain processing, in order to undergo a certain treatment which follows and depends on the processing just performed, before being positioned, by means of a subsequent robot 505, in a subsequent operating station or at the end of the cycle.

The treatment that takes place in a rest station 506, 511 can comprise, for example, making the at least one padding 114 and/or the at least one support base 150 wait or rest for a certain period of time, possibly in conjunction with a possible raising or lowering of the temperature, for example drying at least one washing solution and/or at least one solvent and/or a primer and/or a compatibilizing agent and/or a glue or gluing agent, and/or heating or cooling the padding 114 and/or the support base 150.

These rest stations can be shaped as a cabin or as an accumulation warehouse, for example vertical, also called "paternoster", in which at least one padding 114 and/or at least one support base 150can be positioned and/or stored, and can be shaped as open on one or both sides, for example placed along the third longitudinal direction, so as to allow access to at least one robot 505. Alternatively, these rest stations 506 can be closed in order to maintain a certain temperature inside them, and can be opened temporarily and/or reversibly, to allow access by at least one robot 505.

The at least one rest station 506, 511 comprises heating or cooling means, capable of raising or lowering the temperature inside it with respect to the ambient temperature.

The size of each rest station 506, 511 varies according to the flow of products passing along the plant 500, for example the longer the rest time the more the rest station 506, 511 will be large, so as to be able to accommodate and host more products, and vice versa. The rest stations 506, 511, as mentioned, are located between one operating station and another, so that at least one padding 114 and/or at least one support base 150 - after having undergone a certain processing in a given station - are ready to be subjected to subsequent processing, in a subsequent operating station. Before the inlet area 504, the at least one padding 114 and/or the at least one support base 150 can be made, at least partially, for example by using a molding unit of a new or traditional type.

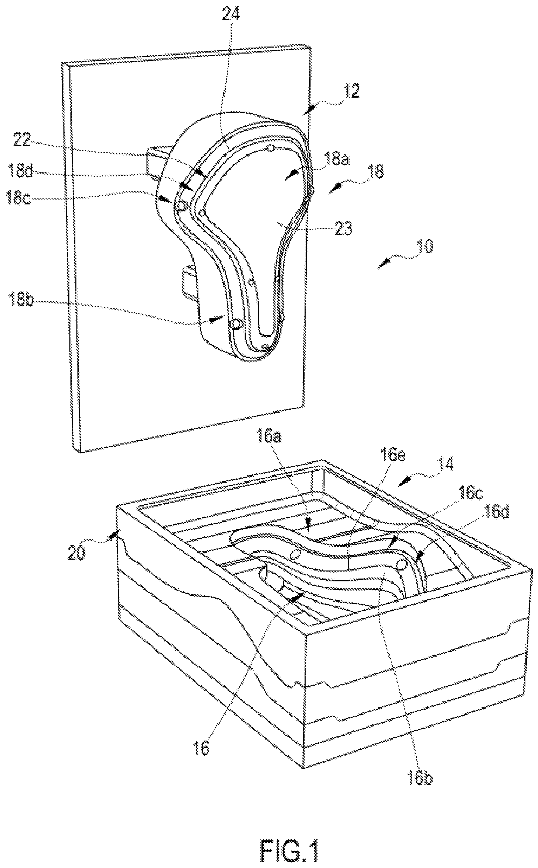

Figure 1 shows an example of a molding unit 10 which can be used for the production of a support element for the human body according to the present invention.

More particularly, the unit 10 comprises a first component 12 and a second component 14. The first component 12 is a punch component of the molding unit 10 while the second component 14 is a matrix component of the molding unit 10.

The first component 12 can be coupled to the second component 14. In particular, when the first component 12 abuts against the second component 14, the molding unit 10 is in a closed operating configuration while when the first component 12 and the second component 14 are moved away from each other, the molding unit is in an open operating configuration.

There are therefore means for approaching-removing the first component 12 with respect to the second component 14 (not shown in the figures) capable of making the molding unit 10 pass from the open operating configuration to the closed one and vice versa, including all operating positions intermediate between the open and the closed one. Such approaching-removing means, generally known in the field, can comprise an electric, pneumatic or other type of actuator intended to approach and/or move away from each other the first component 12 and the second component 14 along a rectilinear or angular or rotating direction. This means that the first component 12 can be moved with respect to the second component 14 along a predetermined rectilinear direction or it can be moved angularly or in rotation in approaching-closing or removing-opening with respect to the second component 14, and vice versa.

In Figure 1, the second component 14 is in a lower position than the first component 12. However, different positions can be provided.

The second component 14 comprises and/or delimits a cavity 16, suitable in use to house and/or to be filled with a material suitable for forming a padding 114 of a support element 100. This material can be inserted, pour or injected into the cavity 16 and is able to foam and/or harden and/or polymerize and/or solidify inside the cavity 16. The material is therefore a hardenable and/or polymerizable and/or solidifiable material.

The cavity 16 is recessed with respect to the second component 14 and is substantially negatively shaped with respect to the padding 114.

The cavity 16 is open at the top, in at least one first configuration or version of the invention. Therefore, the cavity 16 has an opening 16a.

The cavity 16 is formed by a recessed shaped surface 16b and by a peripheral edge 16c which defines the opening 16a.

The first component 12 comprises a punch element 18. The punch element 18 is shaped in such a way as to abut against the cavity 16 and/or against its peripheral edge 16c, so as to determine the closure of the molding unit 10 and/or cavity 16.

The punch element 18 rises from the first component 12. It comprises a shaped area 18a and an outer profile 18b.

The outer profile 18b corresponds to the peripheral edge 16c of the second component 14 and/or is able to come into contact with and/or abut against the peripheral edge 16c.

At the outer profile 18b of the punch element 18 there are abutment elements 18c, for example shaped like a pin or cylinder, which can be housed in suitable and corresponding seats 16d arranged, for example, at the peripheral edge 16c of the cavity 16. The position of the abutment elements 18c and of the special seats 16d correspond, so that when the first component 12 abuts against the second component 14, the abutment elements 18c can be housed in the seats 16d. However, the position of the abutment elements 18c and that of the relative seats 16d can be reversed, without departing from the protection scope of the present invention.

The shaped surface 16b of the cavity 16 is defined by a first delimiting edge 16e. Likewise, the shaped area 18a of the punch element 18 is defined by a second delimiting edge 18d.

In the closed operating configuration, in at least one version of the invention, the first delimiting edge 16e and the second delimiting edge 18d can be aligned one on top of the other with the possibility of maintaining an opening or passage between them to pass the material (or foam) which will form the padding and to ensure that the latter grips firmly to the support component 122 and/or to the support base 150.

The shaped surface 16b and the shaped area 18a respectively determine the upper surface 116 and the lower surface 118 of the padding 114.

When the molding unit 10 is in a closed operating phase, the molding of a padding 114 of the support element 100 takes place.

The exemplary method for making a padding 114 according to the present invention can therefore comprise the following steps:
- providing a material suitable for making a padding 114,
- provide a support component 122,
- positioning the support component 122 at a punch element 18 of the first component 12 of the molding unit 10,
- close a cavity 16 of the second component 14 of the molding unit 10 with the punch element 18, bringing the first component 12 closer to the second component 14 or vice versa, bringing the support component 122 to face the cavity 16, thereby causing for the molding unit 10 a closed operating configuration,
- insert and/or pour and/or inject the material that makes up the padding 114 into the cavity 16,
- harden and/or polymerize and/or solidify this material, obtaining a hardened and/or polymerized and/or solidified material which forms the padding 114, with consequent adhesion of the support component 122 to the padding 114,
- moving the first component 12 away from the second component 14 or vice versa, determining an open operating configuration for the molding unit 10,
- extract the padding 114 from the molding unit 10.

The plant 500 object of the present invention, therefore, can comprise upstream of the inlet area 504, at least one preliminary station for making at least one padding 114, possibly including the molding unit 10 and/or an area for storage in which the at least one padding 114 is stored after its production, so as to feed the plant 500 with said at least one padding or with said plurality of padding, for example continuously.

There may then be a robot 505 capable of picking up the padding 114 from the storage area to bring it to the inlet area 504.

The method may comprise, in one version of the invention, the following steps:
- provide an external covering 120,
- position the external covering 120 at the cavity 16 and block the external covering 120 in position,
- actuating the vacuum means so that the material of the external covering 120 adheres to a shaped surface 16b of the cavity 16, before the step of inserting and/or pouring and/or injecting,
- optionally applying a primer or a compatibilizing agent to an inner face 120c of the external covering 120,
- trimming an excess portion 120a of the external covering 120.

The primer or compatibilizing agent is for example based on polyurethane and/or its components, to facilitate the adhesion of the external covering 120 to the padding 114.

The plant 500 therefore has a trimming station 512 of the excess portion 120a of the external covering 120, which is at least partially applied and/or adhered to the upper surface 116 of the padding 114 (with the exception of the excess portion 120a). The trimming station 512 is manual or automated and/or comprises at least one operating robot equipped with cutting means. In the event that the trimming step takes place in an automated way, the operating robot equipped with cutting means is able to perform this operation precisely, along a whole trimming edge 114a of the padding 114, for example facilitated by the presence of the support component 122.

In at least one version of the invention, the trimming station 512 is located at the final part of the plant 500, before the coupling of the duly treated padding 144 to the support base 150, which is also duly treated, takes place.

When the external covering 120 is present, the padding material 114 is placed in the cavity 16 after the step of positioning the external covering and is placed in contact with the external covering 120 itself.

The step of locking the external covering 120 in position can be performed by locking an excess portion 120a of the external covering 120 for example by means of a retaining plate 20, as better described hereinafter.

In at least one version of the invention, the punch element 18 presses the external covering 120 to cause the mold to close.

Therefore, when the external covering 120 is present, the first robotic element of the preliminary station can also be able to pick up an external covering 120 (for example placed in a special warehouse or in a dedicated place provided near or inside the preliminary station) and to position it at the cavity 116. This positioning takes place in a precise manner, arranging the external covering 120 according to a determined orientation and in a precise position of the cavity 116 and making the excess portion 120a come out of the cavity 16.

This step can take place, as mentioned, by means of the first robotic element or by means of a further robotic element, different to the first robotic element or equal to the latter. The approaching-removing means can also determine the locking in position of the external covering 120 by actuating the retention plate 20, when present, bringing it closer and bringing it in abutment against the second component 14.

The preliminary station may also comprise at least one nozzle or distributor element for applying the primer or compatibilizing agent to the inner face 120c of the external covering 120.

The trimming step is rapid whether it is carried out manually, for example by means of a suitable trimming machine, or whether it is carried out automatically, by means of at least one robot equipped with cutting means. Thanks to the support component 122, in fact, there is no over-material to be trimmed since the outermost edge 122c of the support component 122 is placed at a certain distance, for example about 5 mm or a distance between 1 mm and 10 mm, from the trimming edge 114a of the padding 114.

The trimmed edge 114a of the padding 114 is that edge which ideally separates the excess portion 120a of the external covering 120 from the part of the latter which adheres to the upper surface 116 of the padding 114 itself.

The trimming edge 114a is that edge along which the trimming of the external covering 120 takes place.

Therefore, the trimmed edge 114a of the padding 114, as will be better understood from the following description, is determined in use by the contact between the first delimiting edge 16e and the second delimiting edge 18d of the cavity 16 and of the punch element 18.

When a support base 150 is constrained to the padding 114, the trimming edge 114a is placed internally with respect to the support base 150 and/or to one of its external perimeter profiles 150a.

The step of hardening and/or polymerizing and/or solidifying comprising a step of obtaining an internal zone 123 in which the support component 122 is adhered to the hardened and/or polymerized and/or solidified material, and an annular zone 124, surrounding the internal zone 123, comprising such hardened and/or polymerized and/or solidified material.

The annular area 124 is obtained adjacent to the trimming edge 114a, between the latter and the outermost edge 122c of the support component 122.

Upstream of the inlet area 504, a second preliminary station can also be provided for the manufacturing of the support base 150. This station can include a suitable molding unit, which will not be described further.

From this second preliminary station, the duly printed and/or obtained support bases 150 are placed - in an automated way or not - near the inlet area 504.

Once the at least one padding 114 and/or the at least one support base 150 have arrived near the inlet area 504, a robot 505 positions the at least one padding 114 and/or the at least one support base 150 at the first line 501 and/or the second line 502, respectively. The method according to the present invention also comprises a placement step of the padding 114 at a carding or abrading station 507 and a step of carding or abrading the material of this annular region 124, so as to make its annular surface rough and/or wrinkled and/or having a rough and/or wrinkled pattern.

In fact, as mentioned, it is possible that the material which makes up the padding 114 is at least superficially compact following hardening and/or polymerization and/or solidification. This step of carding or abrading is able to make the surface of the annular area 124 more capable of absorbing the glue or gluing agent necessary for the subsequent bonding of the support base 150. The step of carding or abrading, at least in one version of the invention, can (mechanically) break the chemical bonds of the material constituting the padding 114 and/or can make this area mechanically rough and/or wrinkled, so as to facilitate a subsequent gluing step.

The carding or abrading step can be performed by milling and/or abrasion and/or rasping and/or removal and/or mechanical incision of the surface layer of said annular region 124. The first line 501 and/or the plurality of operating stations and/or the first station therefore comprises the carding or abrasion station 507 in which the carding or abrasion step takes place, for the padding 114. The first station 507 therefore comprises a first operating robot 507a equipped with an abrasion means. Such abrasion means is capable of carding or abrading, for example mechanically, the surface or skin of the foam of the padding 114, or rather of the annular area 124.

In particular, the abrasion means comprises a cutter and/or a rasp and/or a suitable instrument able to remove and/or engrave the surface of this area.

The method according to the present invention can comprise steps for positioning the support base 150 at a cleaning station 508 and for cleaning and/or preparing and/or washing and/or degreasing at least one upper surface of the support base 150 , so that this can accommodate a glue or a gluing agent which will be subsequently applied and therefore bind to the lower surface 118 of the padding 114 and/or to the support component 122.

The second line 502 therefore comprises the cleaning station 508 in which the above-mentioned cleaning and/or preparation and/or washing and/or degreasing step takes place for the support base 150. The cleaning station 508 therefore comprises an operating robot equipped with cleaning means 508a. These cleaning means can comprise at least one nozzle and/or at least one spray, capable of delivering and/or spraying - onto the surface of the support base 150 suitable for coming into contact with the padding 114 - at least one washing solution and/or at least one solvent and/or at least one drying pad. According to one example, the robot cleans the surface of the support base 150 suitable for coming into contact with the padding 114 and/or suitable for undergoing a subsequent gluing step with at least one solvent to dissolve the post-plastic molding oily residues. This step can take place for example by spraying and/or brushing the at least one solvent and consequent drying, for example, with at least one pad.

As regards the second line 502, this washing station 508 constitutes a first operating station.

The method according to the present invention can also include steps for cleaning and/or preparing and/or washing and/or degreasing at least the lower surface 118 of the padding 114 and/or the support component 122. For example, such steps are performed prior to the step of applying the glue or gluing agent, as will be better explained hereinafter. The washing phases can be carried out with suitable washing solutions, also chemical-based ones, in order to prepare the treated and/or washed surfaces. In this way, the washing solution can lead to the breaking of double bonds present in the hardened and/or polymerized and/or solidified material of the padding 114.

In the plant, after carrying out these steps in at least one respective station, there may be a rest station 506, for example for drying the padding 114 and/or the support base 150.

There may then be a step of positioning the support base 150 at a dispensing station 509 and of dispensing and/or applying and/or spraying, on the upper surface of the support base 150, a primer and/or a compatibilizing agent, in order to facilitate the coupling and/or gluing to the padding 114 and/or to the support component 122.

In this way, the connection of the support base 150 with the padding 114 itself is facilitated.

In this step, in the plant, and/or in particular in its second line 502, the dispensing station 509 equipped with a dispensing robot 509a, is provided, capable of dispensing and/or applying and/or spraying the primer and/or the compatibilizing agent, for example by means of a special gun equipped with a dispensing nozzle, such as for example a glue gun. The robot 509a will therefore be equipped with a suitable dispenser, for example with a very fine spray in order to apply the substances indicated above with extreme precision.

A similar dispensing station 509 can also be provided at the first line 501, in order to position the padding 114 at this station and to dispense and/or apply and/or spray - if necessary - a primer and/or a compatibilizing agent also on the lower surface 118 of the padding 114.

After these stations, a rest station 511 may be present, for example to allow drying of the primer and/or of the compatibilizing agent.

Subsequently, the method comprises a step of positioning the padding 114 and/or the support base 150 at at least one gluing station 510 and of applying and/or dispensing and/or spraying a glue or a gluing agent on a lower surface 118 of the padding 114 and on the support component 122 and/or a step of applying and/or dispensing and/or spraying a glue or a gluing agent on the upper surface of the support base 150. There may then be a step of contact and glue the support base 150 to the lower surface 118 and to the support component 122.

These steps may form part of the step of constraining padding 114 and support base 150.

The glue or gluing agent may comprise a polyurethane-based compound, such as a two-component polyurethane-based glue, etc. Other components can be provided based on the specific typology of the materials of the elements that must be glued together.

The glue or the gluing agent can also be applied several times, for example twice on the lower surface 118 of the padding 114, waiting a given period of time between one application and the next. This can be useful especially when the glue is applied for example by means of a brush or similar tool while it may not be necessary in case of spraying of the glue itself.

In the plant 500 there is, therefore, at least the gluing station 510, placed at the first line 501 and/or the second line 502.

The at least one gluing station 510 comprises at least one gluing robot 510a, capable of applying and/or dispensing and/or spraying the glue or gluing agent, for example on the upper surface of the support base 150.

The gluing robot 510a may be the same as the dispensing robot 509a.

In particular, the gluing robot 510a can comprise, for example, a special gun equipped with a dispensing nozzle, such as for example a gluing gun. The robot 510a is therefore equipped with a special dispenser, for example with a very fine spray in order to apply the glue or gluing agent with extreme precision. The areas in which the glue or the gluing agent are applied for example around the edges of the support base 150 without these substances or components being able to be applied to (and therefore dirty) the visible surfaces of the support base itself.

The gluing robot 510a can include, in addition or alternatively, a gun with a wider delivery nozzle to speed up the application on less delicate areas. When both types of gun or dispensing means are present, the change from one to the other or from zone to zone can be managed, for example, like a CNC machine tool change.

As regards the gluing station 510 for the padding 114, it may not be necessary to provide a gluing robot 510a as precise as the one that operates for the support surface 150. In fact, it is unlikely that during this step the visible surfaces of the padding 114 (i.e. for example the upper surface 116) may be erroneously covered (and therefore dirty) with glue or gluing agent since, during this operation, the padding 114 is not trimmed and therefore the excess portion 120a of the covering 120 protects the visible side (or upper surface 116) of the padding 114. Furthermore, it is possible that the upper surface 116 of the padding 114 (which corresponds to its visible surface in use) is in contact with a clamping template that holds the padding 114 in position and protects the upper surface 116 from an erroneous application of glue or gluing agent.

The method therefore comprises an automated or non-automated constraining step, for example removable, of a suitably shaped clamping template, at the upper surface 116 of the padding 114.

The adhesion of the support component 122 to the material which makes the padding 114 is, in at least one version of the invention, determined by the chemical affinity between the two materials and/or results from the hardening and/or polymerization reaction and/or solidification of the material which forms the padding, a reaction which takes place close to the support component 122 itself.

In an alternative version, it would be possible for the step of adhesion of the support component 122 to the padding 114 to be aided by the application, on an internal face 122a of the support component 122 in use, of a suitable compatibilizing and/or adjuvant and/or gluing agent.

In this case, the plant 500 could provide a suitable station.

Between the dispensing station 509 and the at least one gluing station 510 there is a heating rest station 511, for example of the convection type, in which the components (padding 114 and/or support base 150) can rest, for example for a period of 30 min or more than 30 min. The temperature which is maintained in this heating rest position 511 is substantially between 10°C and 100°C.

Therefore, this heating rest station 511 can be in the form of an oven, for example a convective one, which brings the entire mass of such elements or only one of them to a temperature, for example corresponding to about 50°C.

According to one version of the invention, on the other hand, the rest stations 506 envisage that the components inserted therein undergo a cooling step and/or a drying step, for example, of a solvent for the glue and/or the glue itself; the temperature inside them is substantially at room temperature or between 10°C and 80°C.

Finally, the method comprises a step of constraining the support base 150 at the support component 122 and of the lower surface 118 of the padding 114 (and/or at the annular area 124) to which the support component 122 is adhered, in which the step of constraining comprises a step of placing the support base 150 in contact and making it adhere and/or glue on this lower surface 118 and on the support component 122.

The step of constraining the support base 150 to the padding 114 can be carried out for example by means of a compression press, for example separate from the molding unit 10 of the present invention but still included in the plant 500.

According to an alternative version, the support base 150 can be constrained to a male component (not shown in the accompanying figures) by means of suitable engagement means. The male component is alternative, in the molding unit 10, to the first component 12. In fact, once the padding 114 has been made, and after having possibly trimmed the excess portion 120a of the external covering 120, the second component 14 could be coupled the male component removably, bringing the support base 150 in abutment against the lower surface 118 of the padding 114 and against the support component 122. In this way, the bonding and/or gluing of the support base 150 with the padding 114 could take place, through the use of this male component and therefore substantially through a single molding unit 10.

The plant 500 can therefore comprise a suitable constraining station, whether automated or not, in which this step takes place.

According to an even further version, after the at least one gluing station 510 and/or after the subsequent rest station 506, it is possible that at least one picking and positioning robot 505 is arranged in order to position the padding 114 in contact with the support base 150 (or more precisely the upper surface of the support base 150 in contact with the lower surface 118 of the padding 114) so that the bonding of these two components takes place (for example in the above-mentioned constraining station). This constraint can take place in a special cabin or station, in which there are press and/or compression means, capable of exerting pressure between the two components and, in conjunction with the glue or gluing agent applied, determine their bonding.

The support component 122, thanks to the present method, is flush with the lower surface of the padding 114. Therefore, and despite being made with a reduced thickness, in at least one version of the invention it does not protrude with respect to the padding material, for example positioned at the annular area 124.

Therefore, the support component 122 is placed in a sort of corresponding footprint or recessed area (whose dimensions correspond to those of the support component 122 and its thickness) which is determined in the padding 114.

In this way, in at least one version of the invention, the lower surface 118 of the padding 114, formed by the support component 122 and annular area 124, is substantially tangent, once it has been made.

Therefore, the support component 122 is somehow embedded and/or inserted in the material that forms the padding 114. This means that at least the internal face 122a of the support component 122, the one intended to come into contact with the padding 114, and the thickness of the support component 122 will be surrounded and in contact with the material of the padding 114. On the contrary, an external face 122b of the support component 122, which is visible after the step of making the padding and which is suitable in use to be constrained and/or glued to the support base 150, it is not recessed or cantilevered with respect to the material constituting the padding 114 and/or the annular area 124, but substantially planar and/or flush with this.

The method according to the present invention therefore provides that at least one of its steps and/or at least the step of abrading and/or of applying a glue or a gluing agent and/or a primer and/or a compatibilizing agent and/or of washing and/or preparing and/or degreasing and/or trimming is automated and/or performed by a robot, for example anthropomorphic. Therefore, the plant 500 comprises at least one or all anthropomorphic robots.

Thanks to its dimensional stability and consistency of the support component 122, as previously anticipated, it is possible to position the padding 114, once made and with the support component 122 adhered to its lower surface 118, on the above-mentioned clamping template or on a special tool.

Consequently, the stations present on the first line 501 can be equipped with a clamping template or special tool capable of supporting and keeping the padding 114 in position and/or with a special housing seat for this clamping template or specific tool for maintaining a suitable position for the various processes that the padding 114 undergoes. The clamping template or the appropriate tool has for example a shape corresponding in negative to that of the padding 114 and/or its upper surface 116, and/or comprises a vice and/or an undercut.

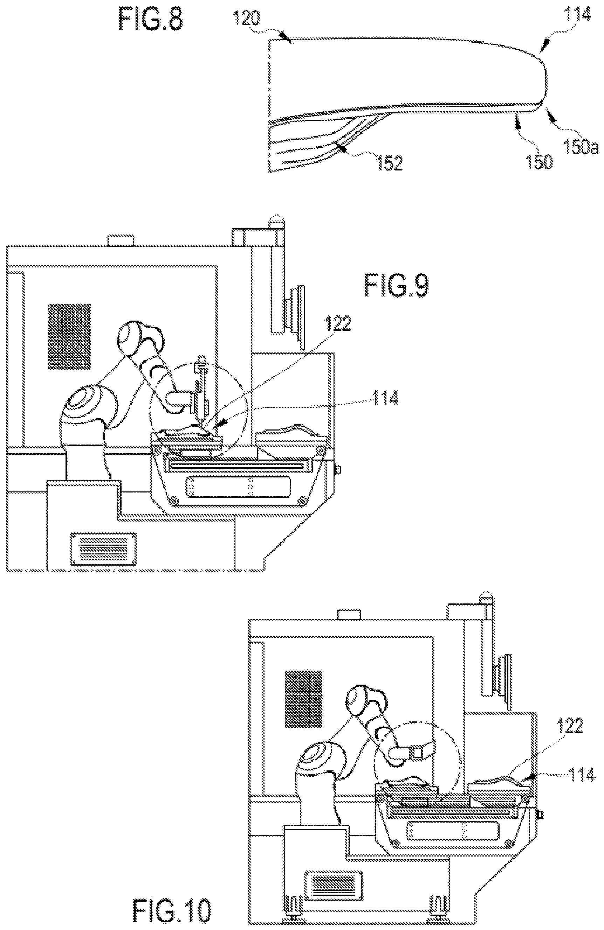

Thus, the steps of the method and/or the step of trimming the external covering 120 and/or the steps of preparing the padding 114, and/or the step of carding or abrading (as visible in figure 9) and/or the step of applying a glue or a gluing agent (as visible in figure 10) are carried out automatically, as mentioned, for example by means of an operating robot, for example anthropomorphic, instead of manually.

In this way, in at least one version of the invention, the support element 100 will be ready to be placed on the market, without the need for further finishing and/or cleaning steps.

The step of positioning the support component 122 on the punch element 18 comprises a step of positioning and/or fixing the support component 122 through the retention means present on the punch element 18. These retention means comprise a containment edge 22 and/or retention means 30 and special seats and/or holes 130 present on the support component 122 itself, as better specified hereinafter.

According to one version of the invention, the support element 100 can have a hole, preferably through, in a central and/or longitudinal region thereof. The hole can be circular or elongated. This is particularly useful when the support element 100 is a saddle for a vehicle, as this hole can allow better ventilation or can constitute a lightening or even can eliminate, for the user, the pressure in some points, such as the prostatic or soft tissue points.

When this hole is present, it can involve both the padding 114 and the support component 122. In particular, in the latter an opening is made, for example circular or elongated, during the providing or molding step of the support component itself. As regards the padding 114 and/or the external covering 120, this hole can be made, possibly at the opening provided on the support component, even after the step of making the padding itself. In this case, the method can comprise a step of making this hole in the substantially central and/or longitudinal part of the external covering 120 and/or of the padding 114, after the step of hardening and/or polymerizing and/or solidifying, or after the step of removing, or after the step of extracting, optionally at the corresponding opening present in the support component 122. This can be performed for example by means of a pressure cutting element or by shearing or other similar methods. This step can also be performed in a suitable operating station of the plant 500 equipped with a robot comprising the aforementioned cutting element.

According to one version of the invention, the padding 114 can comprise at least one insert. This insert can be made for example of a polyurethane material, and/or of a material having a different density with respect to the rest of the material which constitutes the padding and/or of a material with different chemical and/or physical and/or mechanical properties with respect to the remaining material constituting the padding and/or in a material distinguishable in at least one property from the material constituting the rest of the padding 114. According to one version, this at least one insert can be made of a polyurethane gel or ethylene vinyl acetate (EVA).

This at least one insert can be positioned at the at least one area of the padding in which it is desired to obtain a different density and/or mechanical properties compared to the rest of the padding, for example better comfort, and/or better cushioning and/or greater stiffness and/or compactness.

The method according to the present invention, therefore, can comprise a step of providing at least one insert and positioning this at least one insert close to the external covering 120 and/or the support component 122. This step can also be automated by means of a suitable robot, for example anthropomorphic.

The step of providing the at least one insert may comprise a step of providing an already preformed insert or a step of casting a suitable material at the at least one area where this insert is to be positioned.

The support element 100 obtained with the plant and the method according to the present invention, therefore, comprises a padding 114, optionally comprising at least one insert, and a support component 122.

When the at least one insert is supplied already preformed, it can be constrained, for example, to the inner face 122a of the support component 122, so that after making the padding 114 it is incorporated therein. The presence of this at least one insert, for example made of EVA, allows the material to be stiffened at it, both due to the intrinsic characteristics of this insert and due to the fact that - where it is present - the volume that can be occupied by the material of the padding 114, and therefore in fact, the same will be more dense and/or less expanded and/or more rigid (compared to the same material which can be positioned in a larger volume). The at least one insert can, for example, be glued to the support component 122.

When the insert is cast, it can be cast in suitable areas of the cavity 16, before inserting the material which will make up the padding 114. In this case, a specific period of time can be allowed to elapse, for example capable of allowing at least partially the polymerization and/or hardening and/or solidification of the material of the at least one insert, so that the material that makes up the padding does not invade the areas assigned to the at least one insert and/or mix with the latter.

The support component 122 has a shape substantially corresponding to that of the lower surface 118 and/or in plan view padding 114, but of slightly smaller dimensions than the latter.

When the support member 100 is a saddle for a vehicle, such as a bicycle saddle, both the padding 114 and the support component 122 have in plan view a first portion, front or front in use, of a substantially elongated shape, and a second portion, rear in use, of a substantially enlarged shape. The first portion is connected to the second portion, since the overall shape of the padding 114 and/or of the support component 122 is substantially triangular, with rounded edges.

The sides or lateral portions which connect the first portion to the second portion, according to at least one version of the invention, are at least slightly shaped, so as to present a sort of concavity (with the cavity facing outwards and to the side). This shaping can facilitate, for example, pedalling by the user.

The support component 122 can be made of a composite material, for example an agglomerate of cellulose impregnated with latex, for example the material commercially called Texon, and/or a synthetic material and/or a plastic and/or thermoplastic material, such as for example a material comprising or consisting of polyester and viscose, and/or a thermoformable material, and/or a rigid polyurethane or a soft polyurethane, etc.

The support component 122 is at least partially inserted and/or embedded in the hardened and/or polymerized and/or solidified material of the padding 114.

In one version of the invention, the support component 122 is not made of a material such as a fabric or mesh. The fabric or mesh, in general, in fact, do not allow to obtain the necessary stiffness, which it is instead desired to obtain with the support component 122 of the present invention. Furthermore, the fabric or mesh - at least the traditional one - does not help maintain the dimensions of the padding, does not guarantee a "guide" for trimming the external covering and does not prevent the dimensional shrinkage of the material that makes up the padding itself.

The support component 122 has a very thin thickness, in the order of a few millimeters or approximately 1 mm or less. The thickness of the support component 122 can be constant for the entire extension of the support component itself.

The support component 122 ensures a certain "stiffness" to the padding 114. For example, the support component has a stiffness with a Young's modulus ranging from 500 to 3000Mpa.

The support component 122 is in fact more rigid than the material constituting the padding 114 and/or the material constituting the external covering 120.

The support component 122, in at least one version of the invention, has the same stiffness as the support base 150 but with a much reduced thickness with respect to the latter. The support component 122 can be made, in one version of the invention, by a thermoforming process.

The support component 122 has two major faces, substantially having a shape corresponding to that of the support component itself. These major faces, in fact, are spaced from each other by the thickness of the support component which, as mentioned, is very thin.

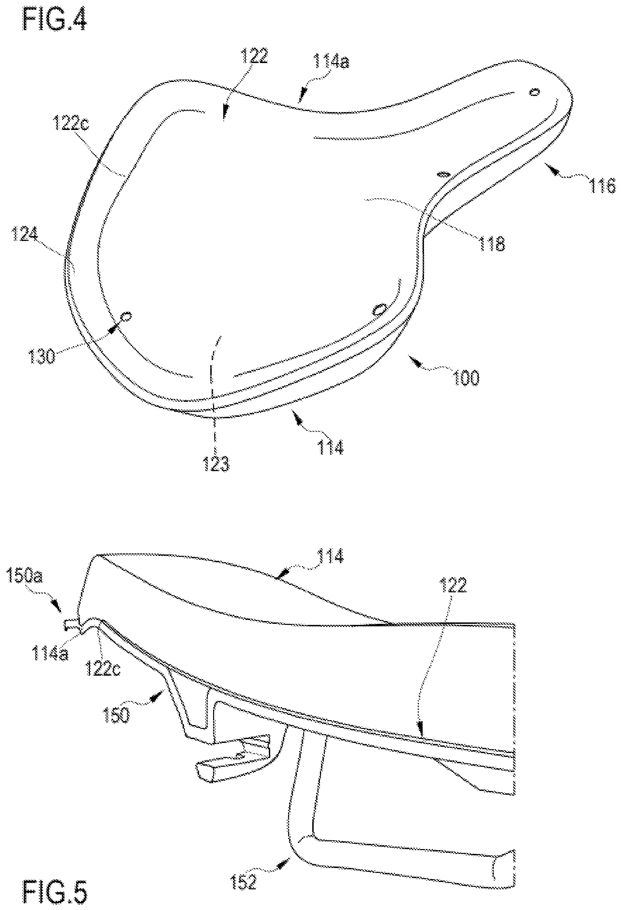

The major faces of the support component are an internal one 122a, suitable in use to be facing towards and/or constrained with the padding material 114, and an external one 122b, suitable in use to be facing towards and/or constrained with the base support 150. The support base 150 (for example visible in figure 5 and in figure 8) can be made for example of a plastic and/or synthetic material such as for example polyamide, or of a metallic or composite material.

At least one of the internal 122a and external 122b faces, preferably the external one 122b in use, is at least partially rough and/or comprises irregularities, ripples, more or less irregular or regulated furrows and valleys, etc. In this way, the support component 122, through its external face 122b having this particular pattern or texture, better retains the glue or the gluing agent which is used for gluing with the support base 150 and/or is impregnated more easily by such glue or gluing agent. In this way, it is possible, for example, to avoid using a primer between the support component and the material which will form the support base 150.

The support element 100, in one version of the invention, can comprise at least one external covering 120. This external covering 120 can be made of a plastic or natural material, such as a fabric, a leather, an imitation leather, a layer of material compact and/or closed cell or expanded polyurethane, a high density material, a synthetic and/or polymeric material such as PVC or polyvinyl chloride, etc.

It is evident that, when the external covering 120 is present, the upper surface 116 of the padding 114 is not external or accessible from the outside or by a user, since it is covered by the external covering 120 and/or constrained thereto.

The external covering 120 also has an outer face 120b in use which, when present, is able to come into contact with the user and/or to be visible from the outside.

The material constituting the padding 114 can comprise a foam, a self-skinning foam, a polyurethane foam, a printed insert, for example by means of a three-dimensional printer, a cushioning and/or comfort insert, etc. Such material is capable of expanding, in at least one embodiment of the invention. Furthermore, in one version of the invention, this material can be inserted, poured or injected into the cavity 16 of the molding unit 10 and is capable of foaming, hardening and/or polymerizing and/or solidifying inside the cavity 16 itself.

As can be seen, the present invention therefore also relates to a support element for the human body obtainable with a method according to the present invention, in which the support element 100 comprises the padding 114, the support component 122 and, optionally, the support base 150, wherein the padding 114 comprises a hardened and/or polymerized and/or solidified material to which the support component 122 is adhered. The support component can be placed, in use, between padding 114 and support base 150, when the latter is present.

This support component 122 is adhered to the padding 114 and/or glued to the support base 150.

An external covering 120 may be present, which at least partially or completely covers the padding 114.

In at least one version of the invention, the padding 114, with the adhered support component 122, constitutes a semi-finished assembly. In fact, to obtain the usable support element 100, it is useful that the support base 150 is also present. However, thanks to the presence of the support component 122, as mentioned, the dimensional stability of the molded padding 114 is maintained, which could therefore be sold as such or stored, for only one subsequent application of the support base 150.

Thanks to the presence of the support component 122, the coupling operations between the padding 114 and the support base 150 require a few seconds, while in the absence of the support component, or by applying materials different from those listed here for the support component 122, pairing operations also take a few minutes. Furthermore, in the absence of the support component 122, the skill of the operator is decisive for a correct connection with the support base. This operation, on the other hand, is also greatly facilitated for the operator in charge, when the support component 122 is present.

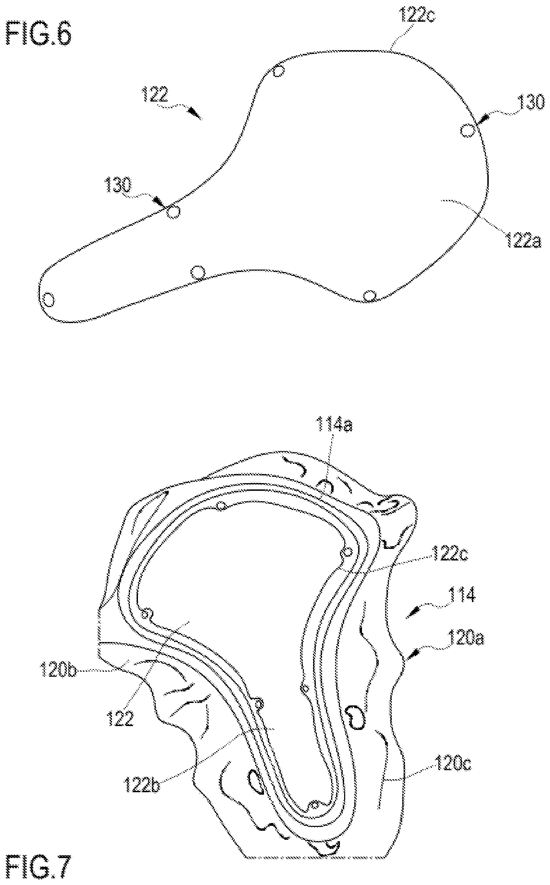

The advantage of the support component 122 is also measured in terms of effectiveness during the trimming operation of the excess portion 120a of the external covering 120. In fact, the advantage lies in having a consistent and compact component - which is the support component 122 - which facilitates the operator in carrying out this operation. When the external covering 120 is present, the molding unit 10 can further comprise vacuum means and/or a suitable retention plate (for example indicated with 20 in figure 1). The retention plate 20 is placed above the cavity 16, so that, when the external covering is present, a layer of material suitable for making it is positioned at the cavity 16. The size of the external covering layer is greater than the dimensions of the cavity so that, once positioned at the cavity 16, it can overflow with respect to the peripheral edge 16c and/or to the first delimiting edge 16e of an excess portion 120a (visible for example in figure 7).

The retention plate 20 locks the external covering 120 in position by pressing and constraining the excess portion 120a, the vacuum means are actuated and the external covering 120 adheres to the shaped surface 16b, assuming the shape of the latter.

The retention plate 20 has a substantially annular surface and is provided with a through opening corresponding to the opening 16a of the cavity 16.

In particular, the external covering has the outer face 120b, suitable for coming into contact with the cavity 16 and intended to constitute the most external layer of the padding 114 in use, and the inner face 120c, suitable for coming into contact with the material of the padding 114. The inner face 120c of the external covering 120 in use is not visible.

When the external covering 120 is not present, on the other hand, the material which constitutes the padding 114 is autonomously capable of creating a more compact film and/or with more closed cells and/or less expanded (compared to the material which will constitute the remaining part of the padding 114) in contact with the shaped surface 16b. Advantageously, the punch element 18 comprises means for retaining the support component 122.

These retention means, for example placed at the shaped area 18a of the punch element 18, can comprise a containment edge 22, suitable in use to contain and/or retain a support component 122 and/or retention means 30.

In one version of the invention, the edge 22 is able to prevent the material constituting the padding from passing through the edge itself and overlapping the external face 122b of the support component 122.

The containment edge 22 is internal with respect to the outer profile 18b and/or the second delimiting edge 18d of the punch element 18. In fact, the outer profile 18b has a larger dimension than the second delimiting edge 18d and/or the containment edge 22. According to one version of the invention, the containment edge 22 is positioned about 1 cm from the outer profile 18b. Consequently, the area enclosed by the containing edge 22 is smaller than the area enclosed by the second delimiting edge 18d, which corresponds to the shaped area 18a, which in turn is smaller than the area enclosed by the outer profile 18b.

The containment edge 22, therefore, divides the shaped area 18a into an area 23 inside the edge 22 and into an annular area 24, surrounding the internal area 23.

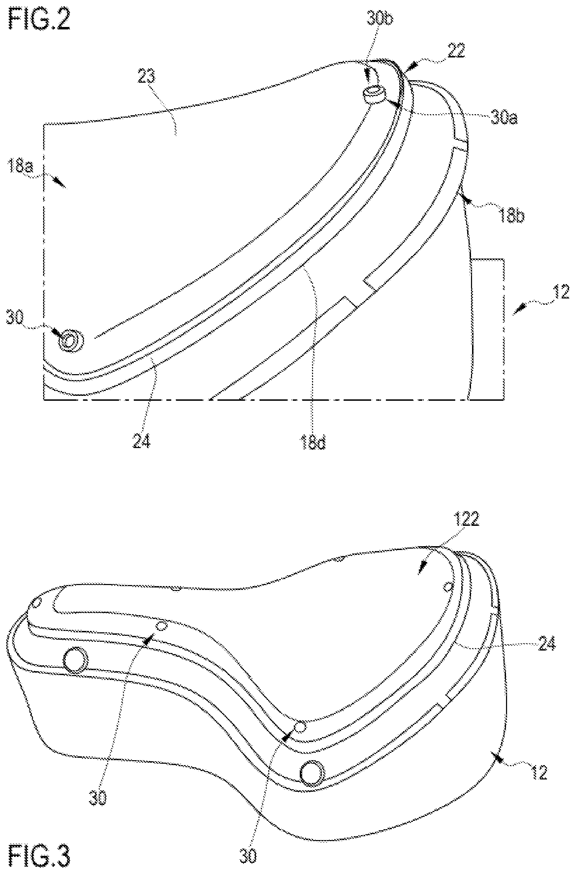

This containment edge 22 protrudes with respect to the shaped area 18a, as visible in figure 2.

In an alternative version, not shown in the figures, the containment edge 22 could be flush with the shaped area 18a and could enclose an internal area, recessed with respect to the shaped area 18a. The depth of the recess of this internal area could correspond to the thickness of the support component 122. In this case, the annular area would also be flush with the edge 22. The edge 22, therefore, would be determined by the depth overhang between inner area and annular area.

The shaped area 18a, however, as visible for example in figures 2 and 3, is shaped to correspond, as mentioned, to the lower surface 118 of the padding 114.

The internal area 23, therefore, determines the shaping of most of the lower surface 118 of the padding 114 and/or of the internal zone 123 while the annular area 24 determines the shaping of the annular zone 124 of the padding 114.

The annular area 24, as visible in figures 2 and 3, therefore, extends from the edge 22 to the second delimiting edge 18d of the punch element 18. It can be inclined outwards, for example downwards and outwards moving away from the edge 22, according to the view of figure 2.

This inclined surface can be straight or curved, with a convexity towards the inside or towards the outside of the punch element 18.

As mentioned, the punch element 18 can comprise suitable retention means 30 of the support component 122, such as for example hooking pins (visible in figure 2).

These retention means 30 can be shaped, for example, like a pin 30a, having a first end constrained or connected to the shaped area 18a and a second end or free end 30b, opposite the first end, having a section greater than that of the pin 30a.

The cross section of the post 30a can be circular or polygonal. Likewise, the cross section of the free end 30b can be circular or polygonal.

The height of the pin 30a can be equal to or only slightly greater than the thickness of the support component 122.

Of course, the retention means 30 can have any other shape suitable for the purpose, without departing from the scope of protection of the present invention.

In an alternative version, retention means 30 could not be present, since the support component could be held in position exclusively by the edge 22.

According to a further version of the invention, the retention means 30 could be present but not the edge 22.

There could then be present means for creating a vacuum, capable of holding the support component 122 in position on the punch element 18, in the presence or absence of the edge 22 and/or the retention means 30.

When the retention means 30 are present, in the support component 122 there will be suitable seats or special through holes 130 (for example visible in figure 4 and in figure 6), having a circular or polygonal cross-section suitable for allowing the passage of the retention means itself and, at the same time, to retain the support component 122 on the punch element 18.

In one version of the invention, the retention means 30 are positioned at the shaped area 18a, or better at the internal area 23, possibly in proximity to the annular area 24.

To this support base 150, when the support element 100 is a saddle for a vehicle, in particular for a bicycle for example, a fork 152, of a type known in the sector, can be connected for connection to the bicycle frame or of the vehicle.

In one version of the invention, the molding unit 10 and/or at least the first component 12 is made of aluminium or other suitable metallic material.

The first component 12 and/or the second component 14 comprise a main plate from which the punch element 18 arises and/or in which the cavity 16 is hollowed, respectively. In the closed operative position of the molding unit 10, the first component 12 and the second component 14 could also be in contact with the respective main plates.

Therefore, a condition of hermetic closure (if desired thanks to suitable gaskets) of the cavity 16 is determined with the punch element 18 or better with its shaped area 18a. Characteristics defined for one variant or embodiment may also be present for other variants or embodiments, unless explicitly provided otherwise.

Modifications and variations of the invention are possible within the scope defined by the claims.

## Claims

1. Plant for making a support element (100) for the human body, such as a saddle of a vehicle, a saddle for bicycles or motorcycles, a backrest or a seat or an armrest for an anatomical chair, or of a similar support element, wherein said plant (500) comprises a plurality of operating stations, for processing at least one padding (114) equipped with a support component (122) placed at its lower surface (118) and/or of at least one support base (150) of said support element (100), and at least one rest station (506, 511), wherein said at least one rest station (506, 511) is subsequent to at least one station of said plurality of operating stations, wherein it comprises at least one operating robot at at least one of said plurality of operating stations, **characterized by the fact that** said plurality of operating stations comprises a carding or abrasion station (507), suitable in use to card and/or abrade at least one annular area (124) of said lower surface (118) of said at least one padding (114) surrounding said support component (122), wherein said station (507) comprises a first operating robot (507a) equipped with at least one abrasion means.

2. Plant according to claim 1, wherein at least one station of said plurality of operating stations is automated and/or wherein at least one station of said plurality of operating stations comprises a cabin, open on at least one side or completely closed, inside which said operating robot is positioned, and/or wherein said at least one operating robot comprises at least one of said first operating robot (507a) equipped with at least one abrasion means, an operating robot equipped with cleaning means (508a), a dispensing robot (509a), an operating robot for gluing (510a), and at least one operating robot equipped with cutting means.

3. Plant according to claim 1 or 2, comprising an inlet zone (504), wherein said at least one padding (114) and/or said at least one support base (150) of said support element (100) is provided in use and/or comprising at least one picking and positioning robot (505), used to pick up and/or position said padding (114) and/or said support base (150).

4. Plant according to claim 3, wherein said at least one robot (505) comprises at least a first picking and positioning robot (505a), used to pick up said padding (114) and/or said support base (150) from said inlet zone (504) and to position it at a first operating station of said plurality of operating stations and/or at said at least one rest station (506, 511).

5. Plant according to claim 3, wherein said at least one robot (505) comprises at least a second picking and positioning robot (505b), assigned in use, to pick up said padding (114) and/or said support base (150) from said first operating station or from said at least one rest station (506, 511) and to position it at a station following or contiguous to said first operating station or at said at least one subsequent rest station (506, 511) .

6. Plant according to any one of the preceding claims, wherein said plant (500) comprises at least a first line (501) of operating stations, for example along a first longitudinal direction, for said padding (114), at least a second line (502) of operating stations, for example along a second longitudinal direction, for said support base (150) and/or comprises a third line (503), along which said at least one rest station (506, 511) and/or said at least one picking and positioning robot (505), which extends for example along a third longitudinal direction and/or which separates said first line (501) and said second line (502).

7. Plant according to any one of the preceding claims, comprising a series of areas, for example transversal, contiguous to each other, wherein each area comprises at least one operating station belonging to said first line (501) and/or at least one operating station belonging to said second line (502), at least one picking and positioning robot (505) and/or at least one rest station (506, 511).

8. Plant according to any one of the preceding claims, wherein said at least one rest station (506, 511) is shaped like a cabin or like an accumulation warehouse, for example vertical, in which said at least one padding (114) and/or said at least one support base (150) can be positioned and/or stored in use, wherein said at least one rest station (506, 511) is closed or open at one or two sides thereof, so as to allow access to said at least one robot (505) and/or wherein said at least one rest station (506, 511) comprises heating or cooling means, capable of raising or lowering the temperature with respect to the ambient temperature.

9. Plant according to any one of the preceding claims, wherein said carding or abrasion station (507) is called the first station of said plurality of operating stations.

10. Plant according to any one of the preceding claims, wherein said plurality of operating stations comprises at least one cleaning station (508) for at least one upper surface of said support base (150), able in use to engage with said lower surface (118) and with said support component (122) of said padding (114), wherein said cleaning station (508) comprises an operating robot equipped with cleaning means (508a).

11. Plant according to the preceding claim, wherein said cleaning means (508a) comprise at least one nozzle and/or at least one spray, capable of delivering and/or spraying at least one washing solution and/or at least one solvent and/or at least a drying pad.

12. Plant according to any one of the preceding claims, wherein said plurality of operating stations and/or said station following or contiguous to said first operating station comprises at least one dispensing station (509) equipped with a dispensing robot (509a), for example equipped with a special dispensing nozzle, capable of dispensing and/or applying and/or spraying a primer and/or a compatibilizing agent, on the upper surface of said at least one support base (150) and/or on said lower surface (118) equipped with said support component (122) of said at least one padding (114).

13. Plant according to any one of the preceding claims, wherein said plurality of operating stations comprises at least one gluing station (510), wherein said at least one gluing station (510) comprises at least one operating robot for gluing (510a), suitable for applying and/or dispensing and/or spraying a glue or a gluing agent in use on the upper surface of said support base (150) and/or on said lower surface (118) of said padding (114) and/or on said support component (122) which is adhered and/or at least partially inserted and/or embedded in said padding (114), in which said gluing robot (510a) is equipped with a suitable dispensing nozzle capable of dispensing and/or applying and/or spraying said glue or said gluing agent.

14. Plant according to any one of the preceding claims, wherein said plurality of operating stations comprises a trimming station (512) of an excess portion (120a) of an external covering (120) at least partially applied and/or adhered to an upper surface (116) of said padding (114), wherein said trimming station (512) is manual or automated and/or comprises at least one robot equipped with cutting means.

15. The plant according to any one of the preceding claims, wherein said at least one rest station (506) is positioned after said carding or abrading station (507) and/or after said cleaning station (508), and/or wherein said at least one rest station (511) is positioned after said at least one dispensing station (509), and/or wherein said at least one rest station (506) is positioned after said at least one gluing station (510).

16. Plant according to any one of the preceding claims, wherein said at least one rest station (506, 511) comprises said rest station (511) of the heating type, for example of the oven type, for example convective, and/or convection oven, wherein the temperature is substantially maintained in a range between 10°C and 100°C or equal to about 50°C, and/or said at least one rest position (506), wherein the temperature is substantially included in a range between 10°C and 80°C.

17. Method of making a support element for the human body, such as a vehicle saddle, a bicycle or motorcycle saddle, a backrest or seat or an armrest for an anatomical chair, or a similar support element including the following steps:
- providing a plant (500) according to one or more of claims 1 to 16,
- providing a padding (114) of said support element (100), wherein said padding (114) comprises a support component (122) placed at a lower surface (118) of said padding (114), in wherein said support component (122) is at least partially inserted and/or embedded in said padding (114),
- positioning said padding (114) at a carding or abrading station (507) equipped with at least one abrading means of said plant (500),
- carding and/or abrading at least a part or annular zone (124) of said lower surface (118), surrounding said support component (122), of said at least one padding (114), so as to make it rough and/or wrinkled,
- provide a support base (150),
- constraining said support base (150) at said support component (122) and at said lower surface (118) of said padding (114).

18. Method according to claim 17, wherein said step of providing said padding (114) and/or said support base (150) comprises providing at least one picking and positioning robot (505), assigned to pick and place said padding (114) and/or said support base (150).

19. Method according to any one of the preceding claims17or 18, comprising a step of positioning said support base (150) at a cleaning station (508) equipped with an operating robot equipped with cleaning means (508a) of said plant (500) and a step of cleaning and/or preparing and/or washing and/or degreasing at least one upper surface of said support base (150), suitable in use to be constrained with said lower surface (118) of said padding (114) and with said support component (122), through a step of dispensing and/or spraying at least one washing solution and/or at least one solvent and/or applying at least one drying pad.

20. Method according to any one of the preceding claims from 17 to19, comprising a step of positioning said padding (114) and/or said support base (150) at a dispensing station (509) equipped with a dispensing robot (509a) of said plant (500), and dispensing and/or applying and/or spraying a primer and/or a compatibilizing agent on the upper surface of said at least one support base (150) and/or on said lower surface (118) of said at least one padding (114) equipped with said support component (122).

21. Method according to any one of the preceding claims 17 to 20, wherein said constraining step comprises a step of positioning said at least one padding (114) and/or said at least one support base (150) at at least one gluing station (510) comprising at least one robot for gluing (510a), applying and/or dispensing and/or spraying a glue or a gluing agent at least on said lower surface (118) of said padding (114) and/or on said support component (122) and a step of putting in contact and glue said support base (150), said lower surface (118) and said support component (122).

22. Method according to any one of the preceding claims 17 to 21, comprising a step of positioning and/or storing said at least one padding (114) and/or said at least one support base (150) at at least one rest position (506, 511) and let said at least one padding (114) and/or said at least one support base (150) wait or rest for a certain period of time in said at least one rest position (506, 511) and/or drying said at least one washing solution and/or at least one solvent and/or said primer and/or a compatibilizing agent and/or said glue or gluing agent, and/or heating or cooling said padding (114) and/or said support base (150).

23. Method according to any one of claims 17 to 22, wherein said method comprises the following steps:
- providing an external covering (120), wherein said external covering (120) is at least partially adhered to an upper surface (116) of said padding (114) and comprises an excess portion (120a),
- placing said padding (114) equipped with said external covering (120) at a trimming station (512) of said excess portion (120a),
- trimming said excess portion (120a) of said external covering (120).

## Patentansprüche

1. Anlage zur Herstellung eines Stützelementes (100) für den menschlichen Körper, wie eines Sattels eines Fahrzeugs, eines Sattels für Fahrräder oder Motorräder, einer Rückenlehne oder eines Sitzes oder einer Armlehne für einen anatomischen Stuhl oder eines ähnlichen Stützelements, worin die besagte Anlage (500) eine Vielzahl von Arbeitsstationen, zur Bearbeitung mindestens einer Polsterung (114), ausgestattet mit einer Stützkomponente (122), die an seiner unteren Oberfläche (118) angeordnet ist, und/oder mindestens eine Stützbasis (150) des besagten Stützelements (100), und mindestens eine Ruhestation (506, 511) umfasst, worin die besagte mindestens eine Ruhestation (506, 511) mindestens einer Station der besagten Vielzahl von Arbeitsstationen nachfolgt, worin sie mindestens einen Arbeitsroboter an mindestens einer der besagten Vielzahl von Arbeitsstationen umfasst, **gekennzeichnet durch** die Tatsache, dass die besagte Vielzahl von Arbeitsstationen eine Kardier- oder Schleifstation (507) umfasst, die im Gebrauch geeignet ist, mindestens einen ringförmigen Bereich (124) der besagten unteren Oberfläche (118) der besagten mindestens einen Polsterung (114), die die besagte Stützkomponente (122) umgibt, zu kardieren und/oder zu schleifen, worin die besagte Station (507) einen ersten Arbeitsroboter (507a) umfasst, der mit mindestens einem Schleifmittel ausgestattet ist.

2. Anlage nach Anspruch 1, worin mindestens eine Station der besagten Vielzahl von Arbeitsstationen automatisiert ist und/oder worin mindestens eine Station der besagten Vielzahl von Arbeitsstationen eine an mindestens einer Seite offene oder vollständig geschlossene Kabine umfasst, in der der besagte Arbeitsroboter positioniert ist, und/oder worin der besagte mindestens eine Arbeitsroboter mindestens einen der besagten ersten Roboter (507a), der mit mindestens einem Schleifmittel ausgestattet ist, einen Arbeitsroboter, der mit Reinigungsmitteln (508a) ausgestattet ist, einen Abgaberoboter (509a), einen Arbeitsroboter zum Kleben (510a) und mindestens einen Arbeitsroboter, der mit Schneidmitteln ausgestattet ist, umfasst.

3. Anlage nach Anspruch 1 oder 2, umfassend eine Einlasszone (504), worin die besagte mindestens eine Polsterung (114) und/oder die besagte mindestens eine Stützbasis (150) des besagten Stützelements (100) im Gebrauch vorgesehen ist und/oder mindestens einen Aufnahme- und Positionierroboter (505) umfasst, der zum Aufnehmen und/oder Positionieren der besagten Polsterung (114) und/oder der besagten Stützbasis (150) verwendet wird.

4. Anlage nach Anspruch 3, worin der besagte mindestens eine Roboter (505) mindestens einen ersten Aufnahme- und Positionierroboter (505a) umfasst, der verwendet wird, um die besagte Polsterung (114) und/oder die besagte Stützbasis (150) aus der besagten Einlasszone (504) aufzunehmen und sie an einer ersten Arbeitsstation der besagten Vielzahl von Arbeitsstationen und/oder an der besagten mindestens einen Ruhestation (506, 511) zu positionieren.

5. Anlage nach Anspruch 3, worin der besagte mindestens eine Roboter (505) mindestens einen zweiten Aufnahme- und Positionierroboter (505b) umfasst, der im Gebrauch dazu bestimmt ist, die besagte Polsterung (114) und/oder die besagte Stützbasis (150) von der besagten ersten Arbeitsstation oder von der besagten mindestens einen Ruhestation (506, 511) aufzunehmen und sie an einer Station, die der besagten ersten Arbeitsstation nachfolgt oder an diese angrenzt, oder an der besagten mindestens einen nachfolgenden Ruhestation (506, 511) zu positionieren.

6. Anlage nach irgendeinem der vorangegangenen Ansprüche, worin die besagte Anlage (500) mindestens eine erste Linie (501) von Arbeitsstationen, zum Beispiel entlang einer ersten Längsrichtung, für die besagte Polsterung (114), mindestens eine zweite Linie (502) von Arbeitsstationen, zum Beispiel entlang einer zweiten Längsrichtung, für die besagte Stützbasis (150) umfasst und/oder eine dritte Linie (503) entlang der besagten mindestens einen Ruhestation (506, 511) und/oder der besagten mindestens einen Aufnahme- und Positionierroboter (505) umfasst, die sich zum Beispiel entlang einer dritten Längsrichtung erstreckt und/oder die die besagte erste Linie (501) und die besagte zweite Linie (502) trennt.

7. Anlage nach irgendeinem der vorangegangenen Ansprüche, umfassend eine Reihe von Bereichen, zum Beispiel quer zueinander, aneinander angrenzend, worin jeder Bereich mindestens eine Arbeitsstation, die zu der ersten besagten Linie (501) gehört, und/oder mindestens eine Arbeitsstation, die zu der besagten zweiten Linie (502) gehört, mindestens einen Aufnahme- und Positionierroboter (505) und/oder mindestens eine Ruhestation (506, 511) umfasst.

8. Anlage nach irgendeinem der vorangegangenen Ansprüche, worin die besagte mindestens eine Ruhestation (506, 511) wie eine Kabine oder wie ein Sammellager, zum Beispiel vertikal, geformt ist, in dem die besagte mindestens eine Polsterung (114) und/oder die besagte mindestens eine Stützbasis (150) im Gebrauch positioniert und/oder gelagert werden kann, worin die besagte mindestens eine Ruhestation (506, 511) an einer oder zwei Seiten davon geschlossen oder offen ist, um den Zugang zu dem besagten mindestens einen Roboter (505) zu ermöglichen, und/oder worin die besagte mindestens eine Ruhestation (506, 511) Heiz- oder Kühlmittel umfasst, die in der Lage sind, die Temperatur in Bezug auf die Umgebungstemperatur zu erhöhen oder zu senken.

9. Anlage nach irgendeinem der vorangegangenen Ansprüche, worin die besagte Kardier- oder Schleifstation (507) als erste Station der besagten Vielzahl von Arbeitsstationen bezeichnet wird.

10. Anlage nach irgendeinem der vorangegangenen Ansprüche, worin die besagte Vielzahl von Arbeitsstationen mindestens eine Reinigungsstation (508) für mindestens eine obere Oberfläche der besagten Stützbasis (150) umfasst, die im Gebrauch in der Lage ist, mit der besagten unteren Oberfläche (118) und mit der besagten Stützkomponente (122) der besagten Polsterung (114) in Eingriff zu kommen, worin die besagte Reinigungsstation (508) einen Arbeitsroboter umfasst, der mit Reinigungsmitteln (508a) ausgestattet ist.

11. Anlage nach dem vorangegangenen Anspruch, worin die besagten Reinigungsmittel (508a) mindestens eine Düse und/oder mindestens eine Sprühvorrichtung umfassen, die in der Lage sind, mindestens eine Waschlösung und/oder mindestens ein Lösungsmittel und/oder mindestens ein Trocknungspad auszugeben und/oder zu sprühen.

12. Anlage nach irgendeinem der vorangegangenen Ansprüche, worin die besagte Vielzahl von Arbeitsstationen und/oder die besagte auf die besagte erste Arbeitsstation nachfolgende oder daran angrenzende Station mindestens eine Abgabestation (509) umfasst, die mit einem Abgaberoboter (509a) ausgestattet ist, der zum Beispiel mit einer speziellen Abgabedüse ausgestattet ist, die in der Lage ist, eine Grundierung und/oder ein Kompatibilisierungsmittel auf die obere Oberfläche der besagten mindestens einen Stützbasis (150) und/oder auf die besagte untere Oberfläche (118), die mit der besagten Stützkomponente (122) der besagten mindestens einen Polsterung (114) ausgestattet ist, abzugeben und/oder aufzutragen und/oder zu sprühen.

13. Anlage nach irgendeinem der vorangegangenen Ansprüche, worin die besagte Vielzahl von Arbeitsstationen mindestens eine Klebestation (510) umfasst, worin die besagte mindestens eine Klebestation (510) mindestens einen Arbeitsroboter zum Kleben (510a) umfasst, der geeignet ist, einen Klebstoff oder ein Klebemittel im Gebrauch auf die obere Oberfläche der besagten Stützbasis (150) und/oder auf die besagte untere Oberfläche (118) der besagten Polsterung (114) und/oder auf die besagte Stützkomponente (122), die in die besagte Polsterung (114) eingehaftet und/oder mindestens teilweise eingesetzt und/oder eingebettet ist, aufzubringen und/oder abzugeben und/oder zu sprühen, in der der besagte Kleberoboter (510a) mit einer geeigneten Abgabedüse ausgestattet ist, die in der Lage ist, den besagten Klebstoff oder das besagte Klebemittel abzugeben und/oder aufzubringen und/oder zu sprühen.

14. Anlage nach irgendeinem der vorangegangenen Ansprüche, worin die besagte Vielzahl der Arbeitsstationen eine Beschneidestation (512) eines überschüssigen Abschnitts (120a) einer äußeren Abdeckung (120) umfasst, die mindestens teilweise auf eine obere Oberfläche (116) der besagten Polsterung (114) aufgebracht ist und/oder an dieser haftet, worin die besagte Beschneidestation (512) manuell oder automatisiert ist und/oder mindestens einen Roboter umfasst, der mit Schneidmitteln ausgestattet ist.

15. Anlage nach irgendeinem der vorangegangenen Ansprüche, worin die besagte mindestens eine Ruhestation (506) nach der besagten Kardier- oder Schleifstation (507) und/oder nach der besagten Reinigungsstation (508) angeordnet ist, und/oder worin die besagte mindestens eine Ruhestation (511) nach der besagten mindestens einen Abgabestation (509) positioniert ist, und/oder worin die besagte mindestens eine Ruhestation (506) nach der besagten mindestens einen Klebestation (510) positioniert ist.

16. Anlage nach einem der vorangegangenen Ansprüche, worin die besagte mindestens eine Ruhestation (506, 511) die besagte Ruhestation (511) vom Heizungstyp, zum Beispiel vom Ofentyp, zum Beispiel Konvektions- und/oder Umluftofen, worin die Temperatur im Wesentlichen in einem Bereich zwischen 10 °C und 100 °C oder gleich etwa 50 °C gehalten wird, und/oder die besagte mindestens eine Ruhestation (506), worin die Temperatur im Wesentlichen in einem Bereich zwischen 10 °C und 80 °C enthalten ist, umfasst.

17. Verfahren zur Herstellung eines Stützelements für den menschlichen Körper, wie eines Fahrzeugsattels, eines Fahrrad- oder Motorradsattels, einer Rückenlehne oder eines Sitzes oder einer Armlehne für einen anatomischen Stuhl, oder eines ähnlichen Stützelements, beinhaltend die folgenden Schritte:
- Bereitstellen einer Anlage (500) nach einem oder mehreren der Ansprüche 1 bis 16,
- Bereitstellen einer Polsterung (114) des besagten Stützelements (100), worin die besagte Polsterung (114) eine Stützkomponente (122) umfasst, die an einer unteren Oberfläche (118) der besagten Polsterung (114) angeordnet ist, worin die besagte Stützkomponente (122) mindestens teilweise in die besagte Polsterung (114) eingesetzt und/oder eingebettet ist,
- Positionierung der besagten Polsterung (114) an einer Kardier- oder Schleifstation (507), die mit mindestens einem Schleifmittel der besagten Anlage (500) ausgestattet ist,
- Kardieren und/oder Schleifen mindestens eines Teils oder einer ringförmigen Zone (124) der besagten unteren Oberfläche (118), die die besagte Stützkomponente (122) der besagten mindestens einen Polsterung (114) umgibt, um sie rau und/oder faltig zu machen,
- Bereitstellen einer Stützbasis (150),
- Festhalten der besagten Stützbasis (150) an der besagten Stützkomponente (122) und an der besagten unteren Oberfläche (118) der besagten Polsterung (114).

18. Verfahren nach Anspruch 17, worin der besagte Schritt des Bereitstellens der besagten Polsterung (114) und/oder der besagten Stützbasis (150) das Bereitstellen mindestens eines Aufnahme- und Positionierroboters (505) umfasst, der zum Aufnehmen und Anordnen der besagten Polsterung (114) und/oder der besagten Stützbasis (150) bestimmt ist.

19. Verfahren nach irgendeinem der vorangegangenen Ansprüche 17 oder 18, umfassend einen Schritt des Positionierens der besagten Stützbasis (150) an einer Reinigungsstation (508), die mit einem Arbeitsroboter ausgestattet ist, der mit Reinigungsmitteln (508a) der besagten Anlage (500) ausgestattet ist, und einen Schritt des Reinigens und/oder Vorbereitens und/oder Waschens und/oder Entfettens mindestens einer oberen Oberfläche der besagten Stützbasis (150), die im Gebrauch geeignet ist, mit der besagten unteren Oberfläche (118) der besagten Polsterung (114) und mit der besagten Stützkomponente (122) festgehalten zu werden, durch einen Schritt des Abgebens und/oder Sprühens mindestens einer Waschlösung und/oder mindestens eines Lösungsmittels und/oder des Aufbringens mindestens eines Trocknungspads.

20. Verfahren nach einem der vorangegangenen Ansprüche 17 bis 19, umfassend einen Schritt des Positionierens der besagten Polsterung (114) und/oder der besagten Stützbasis (150) an einer Abgabestation (509), die mit einem Abgaberoboter (509a) der besagten Anlage (500) ausgestattet ist, und des Abgebens und/oder Aufbringens und/oder Sprühens einer Grundierung und/oder eines Kompatibilisierungsmittels auf die obere Oberfläche der besagten mindestens einen Stützbasis (150) und/oder auf die besagte untere Oberfläche (118) der besagten mindestens einen Polsterung (114), die mit der besagten Stützkomponente (122) ausgestattet ist.

21. Verfahren nach irgendeinem der vorangegangenen Ansprüche 17 bis 20, worin der besagte Festhalteschritt einen Schritt des Positionierens der besagten mindestens einen Polsterung (114) und/oder der besagten mindestens einen Stützbasis (150) an mindestens einer Klebestation (510), umfassend mindestens einen Roboter zum Kleben (510a), Aufbringen und/oder Abgeben und/oder Sprühen eines Klebstoffs oder eines Klebemittels mindestens auf die besagte untere Oberfläche (118) der besagten Polsterung (114) und/oder auf die besagte Stützkomponente (122) und einen Schritt des In-Kontakt-Bringens und Klebens der besagten Stützbasis (150), der besagten unteren Oberfläche (118) und der besagten Stützkomponente (122) umfasst.

22. Verfahren nach irgendeinem der vorangegangenen Ansprüche 17 bis 21, umfassend einen Schritt des Positionierens und/oder Lagerns der besagten mindestens einen Polsterung (114) und/oder der besagten mindestens einen Stützbasis (150) in mindestens einer Ruhestation (506, 511) und des Warten- oder Ruhenlassens der besagten mindestens einen Polsterung (114) und/oder der besagten mindestens einen Stützbasis (150) für einen bestimmten Zeitraum in der besagten mindestens einen Ruhestation (506, 511) und/oder des Trocknens der besagten mindestens einen Waschlösung und/oder des mindestens einen Lösungsmittels und/oder der besagten Grundierung und/oder eines Kompatibilisierungsmittel und/oder des besagten Klebstoffs oder Klebemittels und/oder des Heizens oder Kühlens der besagten Polsterung (114) und/oder der besagten Stützbasis (150).

23. Verfahren nach irgendeinem der Ansprüche 17 bis 22, worin das besagte Verfahren die folgenden Schritte umfasst:
- Bereitstellen einer äußeren Abdeckung (120), worin die besagte äußere Abdeckung (120) mindestens teilweise an einer oberen Oberfläche (116) der besagten Polsterung (114) haftet und einen überschüssigen Abschnitt (120a) umfasst,
- Anordnen der besagten Polsterung (114), die mit der besagten äußeren Abdeckung (120) an einer Beschneidestation (512) des besagten überschüssigen Abschnitts (120a) ausgestattet ist,
- Beschneiden des besagten überschüssigen Abschnitts (120a) der besagten äußeren Abdeckung (120).

## Revendications

1. Installation pour la fabrication d'un élément de support (100) pour le corps humain, tel qu'une selle de véhicule, une selle de bicyclette ou de motocyclette, un dossier ou un siège ou un accoudoir pour une chaise anatomique, ou d'un élément de support similaire, ladite installation (500) comprenant une pluralité de postes de travail pour le traitement d'au moins un rembourrage (114) muni d'un composant de support (122) placé sur sa surface inférieure (118) et/ou d'au moins une base de support (150) dudit élément de support (100), et au moins un poste de repos (506, 511), dans laquelle ledit au moins un poste de repos (506, 511) est subséquent à au moins un poste de ladite pluralité de postes de travail, dans laquelle elle comprend au moins un robot de travail au niveau d'au moins un poste de ladite pluralité de postes de travail, **caractérisée en ce que** ladite pluralité de postes de travail comprend un poste de cardage ou d'abrasion (507), apte en utilisation à carder et/ou abraser au moins une aire annulaire (124) de ladite surface inférieure (118) dudit au moins un rembourrage (114) entourant ledit composant de support (122), dans laquelle ledit poste (507) comprend un premier robot de travail (507a) muni d'au moins un moyen d'abrasion.

2. Installation selon la revendication 1, dans laquelle au moins un poste de ladite pluralité de postes de travail est automatisé et/ou dans laquelle au moins un poste de ladite pluralité de postes de travail comprend une cabine, ouverte sur au moins un côté ou complètement fermée, à l'intérieur de laquelle ledit robot de travail est positionné, et/ou dans laquelle ledit au moins un robot de travail comprend au moins l'un parmi ledit premier robot (507a) muni d'au moins un moyen d'abrasion, un robot de travail muni de moyens de nettoyage (508a), un robot de distribution (509a), un robot de travail pour le collage (510a) et au moins un robot de travail muni de moyens de coupage.

3. Installation selon la revendication 1 ou 2, comprenant une zone d'entrée (504), dans laquelle ledit au moins un rembourrage (114) et/ou ladite au moins une base de support (150) dudit élément de support (100) est fourni/e en utilisation, et/ou comprend au moins un robot de prélèvement et de positionnement (505), utilisé pour prélever et/ou positionner ledit rembourrage (114) et/ou ladite base de support (150).

4. Installation selon la revendication 3, dans laquelle ledit au moins un robot (505) comprend au moins un premier robot de prélèvement et de positionnement (505a), utilisé pour prélever ledit rembourrage (114) et/ou ladite base de support (150) de ladite zone d'entrée (504) et pour le positionner au niveau d'un premier poste de travail de ladite pluralité de postes de travail et/ou dudit au moins un poste de repos (506, 511).

5. Installation selon la revendication 3, dans laquelle ledit au moins un robot (505) comprend au moins un deuxième robot de prélèvement et de positionnement (505b), affecté en utilisation pour prélever ledit rembourrage (114) et/ou ladite base de support (150) à partir dudit premier poste de travail ou dudit au moins un poste de repos (506, 511) et pour le positionner au niveau d'un poste subséquent ou contigu audit premier poste de travail ou audit au moins un poste de repos subséquent (506, 511).

6. Installation selon l'une quelconque des revendications précédentes, dans laquelle ladite installation (500) comprend au moins une première ligne (501) de postes de travail, par exemple le long d'une première direction longitudinale, pour ledit rembourrage (114), au moins une deuxième ligne (502) de postes de travail, par exemple le long d'une deuxième direction longitudinale, pour ladite base de support (150) et/ou comprend une troisième ligne (503), le long de laquelle se trouvent ledit au moins un poste de repos (506, 511) et/ou ledit au moins un robot de prélèvement et de positionnement (505), qui s'étend par exemple le long d'une troisième direction longitudinale et/ou qui sépare ladite première ligne (501) et ladite deuxième ligne (502).

7. Installation selon l'une quelconque des revendications précédentes, comprenant une série d'aires, par exemple transversales, contiguës les unes aux autres, dans laquelle chaque aire comprend au moins un poste de travail appartenant à ladite première ligne (501) et/ou au moins un poste de travail appartenant à ladite deuxième ligne (502), au moins un robot de prélèvement et de positionnement (505) et/ou au moins un poste de repos (506, 511).

8. Installation selon l'une quelconque des revendications précédentes, dans laquelle ledit au moins un poste de repos (506, 511) a la forme d'une cabine ou d'un entrepôt d'accumulation, par exemple vertical, dans lequel ledit au moins un rembourrage (114) et/ou ladite au moins une base de support (150) peuvent être positionnés et/ou stockés en utilisation, dans lequel ledit au moins un poste de repos (506, 511) est fermé ou ouvert sur un ou deux côtés, de manière à permettre l'accès audit au moins un robot (505) et/ou dans laquelle ledit au moins un poste de repos (506, 511) comprend des moyens de chauffage ou de refroidissement, capables d'augmenter ou d'abaisser la température par rapport à la température ambiante.

9. Installation selon l'une quelconque des revendications précédentes, dans laquelle ledit poste de cardage ou d'abrasion (507) est désigné comme le premier poste de ladite pluralité de postes de travail.

10. Installation selon l'une quelconque des revendications précédentes, dans laquelle ladite pluralité de postes de travail comprend au moins un poste de nettoyage (508) pour au moins une surface supérieure de ladite base de support (150), apte en utilisation à s'engager avec ladite surface inférieure (118) et avec ledit composant de support (122) dudit rembourrage (114), dans laquelle ledit poste de nettoyage (508) comprend un robot de travail muni de moyens de nettoyage (508a).

11. Installation selon la revendication précédente, dans laquelle lesdits moyens de nettoyage (508a) comprennent au moins une buse et/ou au moins un pulvérisateur, capables de délivrer et/ou de pulvériser au moins une solution de lavage et/ou au moins un solvant et/ou au moins un tampon de séchage.

12. Installation selon l'une quelconque des revendications précédentes, dans laquelle ladite pluralité de postes de travail et/ou ledit poste suivant ou contigu audit premier poste de travail comprend au moins un poste de distribution (509) muni d'un robot de distribution (509a), par exemple muni d'une buse de distribution spéciale, capable de distribuer et/ou d'appliquer et/ou de pulvériser un apprêt et/ou un agent de compatibilisation, sur la surface supérieure de ladite au moins une base de support (150) et/ou sur ladite surface inférieure (118) munie dudit composant de support (122) dudit au moins un rembourrage (114).

13. Installation selon l'une quelconque des revendications précédentes, dans laquelle ladite pluralité de postes de travail comprend au moins un poste de collage (510), dans laquelle ledit au moins un poste de collage (510) comprend au moins un robot de travail de collage (510a), apte à appliquer et/ou à distribuer et/ou à pulvériser en utilisation une colle ou d'un agent de collage sur la surface supérieure de ladite base de support (150) et/ou sur ladite surface inférieure (118) dudit rembourrage (114) et/ou sur ledit composant de support (122) qui est adhérent et/ou au moins partiellement inséré et/ou intégré dans ledit rembourrage (114), dans laquelle ledit robot de collage (510a) est muni d'une buse de distribution appropriée capable de distribuer et/ou d'appliquer et/ou de pulvériser ladite colle ou ledit agent de collage.

14. Installation selon l'une quelconque des revendications précédentes, dans laquelle ladite pluralité de postes de travail comprend un poste de découpe (512) d'une portion excédentaire (120a) d'un revêtement extérieur (120) au moins partiellement appliqué et/ou adhérent à une surface supérieure (116) dudit rembourrage (114), dans laquelle ledit poste de découpe (512) est manuel ou automatisé et/ou comprend au moins un robot muni de moyens de coupage.

15. Installation selon l'une quelconque des revendications précédentes, dans laquelle ledit au moins un poste de repos (506) est positionné après ledit poste de cardage ou d'abrasion (507) et/ou après ledit poste de nettoyage (508), et/ou dans laquelle ledit au moins un poste de repos (511) est positionné après ledit au moins un poste de distribution (509), et/ou dans laquelle ledit au moins un poste de repos (506) est positionné après ledit poste de collage (510).

16. Installation selon l'une quelconque des revendications précédentes, dans laquelle ledit au moins un poste de repos (506, 511) comprend ledit poste de repos (511) de type chauffage, par exemple de type four, par exemple à convection, et/ou un four à convection, dans lequel la température est sensiblement maintenue dans une plage entre 10 °C et 100 °C ou d'environ 50 °C, et/ou ledit au moins un poste de repos (506), dans lequel la température est sensiblement incluse dans une plage entre 10 °C et 80 °C.

17. Procédé de fabrication d'un élément de support pour le corps humain, tel qu'une selle de véhicule, une selle de bicyclette ou de motocyclette, un dossier ou un siège ou un accoudoir pour une chaise anatomique, ou un élément de support similaire incluant les étapes suivantes :
- fournir une installation (500) selon une ou plusieurs des revendications 1 à 16,
- fournir un rembourrage (114) dudit élément de support (100), dans lequel ledit rembourrage (114) comprend un composant de support (122) placé sur une surface inférieure (118) dudit rembourrage (114), dans lequel ledit composant de support (122) est au moins partiellement inséré et/ou intégré dans ledit rembourrage (114),
- positionner ledit rembourrage (114) au niveau d'un poste de cardage ou d'abrasion (507) muni d'au moins un moyen d'abrasion de ladite installation (500),
- carder et/ou abraser au moins une partie ou zone annulaire (124) de ladite surface inférieure (118), entourant ledit élément de support (122) dudit au moins un rembourrage (114), de manière à la rendre rugueuse et/ou froissée,
- fournir une base de support (150),
- contraindre ladite base de support (150) au niveau dudit composant de support (122) et de ladite surface inférieure (118) dudit rembourrage (114).

18. Procédé selon la revendication 17, dans lequel ladite étape de fourniture dudit rembourrage (114) et/ou de ladite base de support (150) comprend la fourniture d'au moins un robot de prélèvement et de positionnement (505), affecté au prélèvement et au positionnement dudit rembourrage (114) et/ou de ladite base de support (150).

19. Procédé selon l'une quelconque des revendications précédentes 17 ou 18, comprenant une étape de positionnement de ladite base de support (150) au niveau d'un poste de nettoyage (508) muni d'un robot de travail muni de moyens de nettoyage (508a) de ladite installation (500) et une étape de nettoyage et/ou de préparation et/ou de lavage et/ou de dégraissage d'au moins une surface supérieure de ladite base de support (150), apte en utilisation à être contrainte avec ladite surface inférieure (118) dudit rembourrage (114) et avec ledit composant de support (122), par une étape de distribution et/ou de pulvérisation d'au moins une solution de lavage et/ou d'au moins un solvant et/ou d'application d'au moins un tampon de séchage.

20. Procédé selon l'une quelconque des revendications précédentes 17 à 19, comprenant une étape de positionnement dudit rembourrage (114) et/ou de ladite base de support (150) au niveau d'un poste de distribution (509) muni d'un robot de distribution (509a) de ladite installation (500), et de distribution et/ou d'application et/ou de pulvérisation d'un apprêt et/ou d'un agent de compatibilisation sur la surface supérieure de ladite base de support (150) et/ou sur ladite surface inférieure (118) dudit au moins un rembourrage (114) muni dudit composant de support (122).

21. Procédé selon l'une quelconque des revendications précédentes 17 à 20, dans lequel ladite étape de contrainte comprend une étape de positionnement dudit au moins un rembourrage (114) et/ou de ladite au moins une base support (150) au niveau de l'au moins un poste de collage (510) comprenant au moins un robot de collage (510a), une étape d'application et/ou de distribution et/ou de pulvérisation d'une colle ou un agent de collage au moins sur ladite surface inférieure (118) dudit rembourrage (114) et/ou sur ledit composant de support (122), et une étape de mise en contact et de collage de ladite base de support (150), de ladite surface inférieure (118) et dudit composant de support (122).

22. Procédé selon l'une quelconque des revendications précédentes 17 à 21, comprenant une étape de positionnement et/ou de stockage dudit au moins un rembourrage (114) et/ou de ladite au moins une base de support (150) au niveau d'au moins un poste de repos (506, 511) et de laisser ledit au moins un rembourrage (114) et/ou ladite au moins une base de support (150) attendre ou reposer pendant une certaine période de temps sur l'au moins un poste de repos (506, 511) et/ou de séchage de ladite au moins une solution de lavage et/ou dudit solvant et/ou dudit apprêt et/ou d'un agent de compatibilisation et/ou de ladite colle ou ledit agent de collage, et/ou de chauffage ou de refroidissement dudit rembourrage (114) et/ou de ladite base de support (150).

23. Procédé selon l'une quelconque des revendications 17 à 22, ledit procédé comprenant les étapes suivantes :
- fournir un revêtement extérieur (120), dans lequel ledit revêtement extérieur (120) est au moins partiellement adhérent à une surface supérieure (116) dudit rembourrage (114) et comprend une portion excédentaire (120a),
- placer ledit rembourrage (114) muni dudit revêtement extérieur (120) au niveau d'un poste de découpe (512) de ladite portion excédentaire (120a),
- découper ladite portion excédentaire (120a) dudit revêtement extérieur (120).
